Europäisches Patentamt

**European Patent Office**

Office européen des brevets

(11) Veröffentlichungsnummer: **0 232 738**
**A2**

# (12) EUROPÄISCHE PATENTANMELDUNG

(21) Anmeldenummer: **87100428.9**

(22) Anmeldetag: **15.01.87**

(51) Int. Cl.4: **B62D 23/00 , B62D 29/04**

(30) Priorität: **24.01.86 DE 3602156**

(43) Veröffentlichungstag der Anmeldung:
**19.08.87 Patentblatt 87/34**

(84) Benannte Vertragsstaaten:
**AT BE CH DE ES FR GB GR IT LI LU NL SE**

(71) Anmelder: **Lorenz & Co. GmbH**
**Grubenstrasse 21**
**D-6633 Wadgassen(DE)**

(72) Erfinder: **Banton, Birgit, geb. Bergmann**
**Am Halberg 6**
**D-6601 Saarbrücken-Schafbrücke(DE)**
Erfinder: **Selors, Heino**
**Am Halberg 6**
**D-6601 Saarbrücken-Schafbrücke(DE)**

(74) Vertreter: **Vièl, Georg, Dipl.-Ing.**
**Am Zimmerplatz 16**
**D-6606 Saarbrücken-Gersweiler(DE)**

(54) **Selbst- oder mittragende Karosserie für Personenkraftwagen.**

(57) Die Patentanmeldung befaßt sich mit einer selbst-oder mittragenden Karosserie, wobei das Untergestell und der Aufbau aus miteinander verschweißten Blechen besteht und zur Aussteifung ein flächiges Element fest mit Karosserieteilen verbunden ist.

Gemäß der Erfindung ist vorgesehen, daß das Untergestell und der Aufbau auf der Innenseite großflächig mit dünnen Matten, die mit einem reak-tionshärtenden Kunstharz getränkt sind, ausge-schlagen ist, und daß die Matten im ausgehärteten Zustand des Kunstharzes fest mit dem Untergestell und dem Aufbau verbunden sind.

Als wesentlicher Vorteil ergibt sich, daß auf ein-fache Weise schnell und ohne großen Aufwand zum Umbau bestimmte Untergestelle und Aufbauten von Personenkraftwagen hinsichtlich ihrer Stabilität so hergerichtet werden können, daß sie den ein-schlägigen Vorschriften entsprechen.

Fig.1

## Selbst-oder mittragende Karosserie für Personenkraftwagen

Die Erfindung betrifft eine selbst-oder mittragende Karosserie, wobei das Untergestell und der Aufbau aus miteinander verschweißten Blechen besteht und zur Aussteifung ein flächiges Element fest mit Karosserieteilen verbunden ist.

Personenkraftwagen mit aus Blechen gefertigtem Untergestell und mit diesem fest verbundenen Aufbau sind weitgehend als selbst-oder mittragende Konstruktion ausgeführt. Die Dicke der Bleche ist so bemessen, daß eine ausreichende Stabilität bei weitgehend geschlossener Ausführung der Karosserie gegeben ist.

Personenkraftwagen dieser Art werden nach Fertigstellung oft in der verschiedensten Art umgebaut. So besteht beispielsweise oft der Wunsch, ein geschlossenes Fahrzeug in ein solches zu ändern, das ein aufklappbares oder abnehmbares Dach (Cabriolet) aufweist. Zu diesem Zweck muß das Dach oder Teile davon entfernt werden, was dazu führt, daz die Stabilität des verbleibenden Aufbaus mit dem Untergestell unzureichend ist.

Bekannt ist, das Untergestell und den Aufbau durch Einschweißen von Verstärkungen -Bleche, Profile -nachträglich ausreichend steif zu machen. Bekannt ist auch, im Innern einer Karosserie einen vorgefertigten Versteifungsrahmen einzusetzen und diesen mit der Karosserie zu verbinden (DE-GM 83 34 199). Diese Methoden sind vor allem aufwendig und zeitraubend.

Bekannt ist außerdem, Wandungen von Aufbauten für Fahrzeuge dadurch zu verstärken, daß an zum Beulen neigenden Bereichen ein flächiges Element angebracht ist (DE-OS 25 58 332).

Der Erfindung liegt die Aufgabe zugrunde, solchen aufgeschnittenen Aufbauten von Personenkraftwagen die vorgeschriebene Stabilität zu verleihen.

Diese Aufgabe wird erfindungsgemäß dadurch gelöst,daß das Untergestell und der Aufbau auf der Innenseite großflächig mit dünnen Matten, die mit einem reaktionshärtenden Kunstharz getränkt sind, ausgeschlagen ist, und daß die Matten im ausgehärteten Zustand des Kunstharzes fest mit dem Untergestell und dem Aufbau verbunden sind.

Nach einer weiteren Ausbildung der Erfindung ist vorgesehen, daß die Matten faserartig ausgebildet sind.

Erfindungsgemäß können die Matten auch gewebeartig ausgebildet sein.

Werden extrem dünne Matten verwendet, so können diese in mehreren Lagen/Schichten aufgetragen sein.

Als Werkstoffe für die Matten können Glasfasern, Kohlefasern oder Fasern aus reißfestem Kunststoff verwendet werden.

Zum Tränken der Matten kommen in erster Linie Epoxyd-und Polyesterharze in Frage.

Die gehärtete Schicht, bestehend aus den Matten und dem Kunstharz, wird gemäß einer anderen Ausbildung der Erfindung mechanisch, z.B. durch Nieten, an den von außen unsichtbaren Stellen mit dem Untergestell bzw. dem Aufbau verbunden.

Im Rahmen der Erfindung liegt es auch, wenn zwischen einzelnen, nacheinander anzubringenden Matten Platten von begrenzter Ausdehnung vorgesehen sind.

Die mit der Erfindung erzielten Vorteile bestehen insbesondere darin, daß auf einfache Weise - schnell und ohne großen Aufwand zum Umbau bestimmte Untergestelle und Aufbauten von Personenkraftwagen hinsichtlich ihrer Stabilität so hergerichtet werden können, daß sie den einschlägigen Vorschriften entsprechen.

Die Erfindung wird anhand der Zeichnung näher erläutert.

Es zeigen

Fig. 1 einen Teil einer PKW-Karosserie erfindungsgemäß ausgebildet und

Fig. 2 schematisch den neuen Zwei-Schalen-Aufbau für Personenkraftwagen.

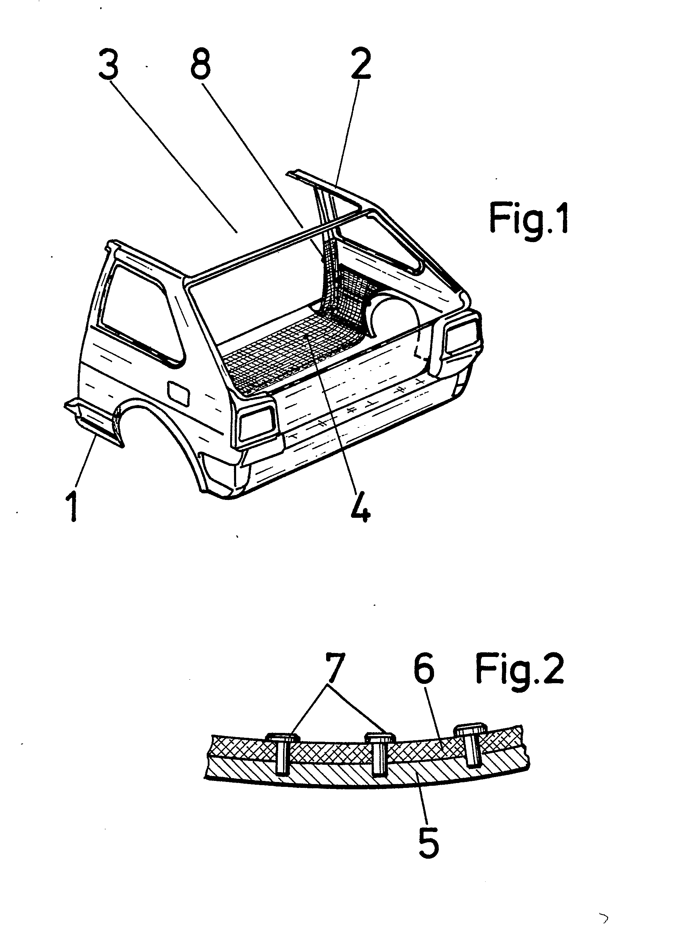

In Fig. 1 ist mit 1 das Untergestell und mit 2 der Aufbau einer selbsttragenden Karosserie-bezeichnet, die in bekannter Weise aus Blechen bestehen, welche miteinander durch Schweißen verbunden sind.

Soll eine solche, oder eine mittragende Karosserie, die geschlossen hergestellt wurde, als Cabriolet umgebaut werden, so wird das Dach 3 ganz oder teilsweise entfernt. Dadurch wird die Karosserie unstabil.

Um dem zu begegnen, werden erfindungsgemäß Matten 4, die beispielsweise mit Epoxydharz getränkt sind, großflächig auf der Innenseite des Untergestells 1 und dem Aufbau 2 angebracht. So entsteht sozusagen eine Zwei-Schalen-Karosserie, bestehend aus Blech als Außenhaut 5 und zur Stabilisierung eine z.B. GFK-Schicht 6 (Glasfaserverstärkter Kunststoff) auf der Innenseite, wie das schematisch in Fig. 2 dargestellt ist. Fig. 2 zeigt auch, daß die beiden Schalen 5 und 6 mechanisch miteinander verbunden sein können, z.B. mit Nieten oder ähnlichen Verbindungselementen 7.

Es hat sich als zwechmäßig erwiesen, die Matten 4 aus beispielsweise Glasfasern möglichst dünn zu wählen und nacheinander mehrere kunstharzgetränkte Matten 4 aufeinander anzubringen.

Zum Erreichen einer sehr hohen Verwindungssteifigkeit können zwischen einzelnen Matten 4 Platten (nicht dargestellt) von begrenzter Ausdehnung vorgesehen sein, die aus PVC oder z.B. synthetischem Fließstoff bestehen. Auf diese Weise ergibt sich eine von anderen Gebieten her bekannte sogenannte Sandwich-Bauweise.

Damit der Aufbau 2, zusammen mit dem Untergestell 1, ausreichend verwindungssteif ist, ist Sorge dafür zu tragen, daß die Matten 4 sich auch über die Holme 8 erstrecken, wie das Fig. 1 zeigt.

## Ansprüche

1. Selbst-oder mittragende Karosserie, wobei das Untergestell und der Aufbau aus miteinander verschweißten Blechen besteht und zur Aussteifung ein flächiges Element fest mit Karosserieteilen verbunden ist, dadurch **gekennzeichnet,** daß das Untergestell (1) und der Aufbau (2) auf der Innenseite großflächig mit dünnen Matten (4), die mit einem reaktionshärtenden Kunstharz getränkt sind, ausgeschlagen ist, und daß die Matten (4) im ausgehärteten Zustand des Kunstharzes fest mit dem Untergestell (1) und dem Aufbau (2) verbunden sind.

2. Selbst-oder mittragende Karosserie nach Anspruch 1, dadurch **gekennzeichnet,** daß die Matten (4) faserartig ausgebildet sind.

3. Selbst-oder mittragende Karosserie nach Anspruch 1, dadurch **gekennzeichnet,** daß die Matten (4) gewebeartig ausgebildet sind.

4. Selbst-oder mittragende Karosserie nach Anspruch 1, 2 oder 3, dadurch **gekennzeichnet,** daß die Matten (4) in mehreren Schichten aufgetragen sind.

5. Selbst-oder mittragende Karosserie nach einem oder mehreren der vorhergehenden Ansprüche, dadurch **gekennzeichnet,** daß die Matten (4) aus Glasfasern gebildet sind.

6. Selbst-oder mittragende Karosserie nach einem oder mehreren der vorhergehenden Ansprüche, dadurch **gekennzeichnet,** daß die Matten (4) aus Kohlefasern gebildet sind.

7. Selbst-oder mittragende Karosserie nach einem oder mehreren der vorhergehenden Ansprüche, dadurch **gekennzeichnet,** daß die Matten (4) aus reizfesten Kunststofffasern gebildet sind.

8. Selbst-oder mittragende Karosserie nach Anspruch 1, dadurch **gekennzeichnet,** daß Epoxydharze verwendet sind.

9. Selbst-oder mittragende Karosserie nach Anspruch 1, dadurch **gekennzeichnet,** daß Polyesterharze verwendet sind.

10. Selbst-oder mittragende Karosserie nach Anspruch 1, dadurch **gekennzeichnet,** daß an den von außen unsichtbaren Stellen des Untergestells (1) und des Aufbaus (2) diese mechanisch (7) mit der aus Matten und Kunstharz bestehenden Schicht (6) verbunden sind.

11. Selbst-oder mittragende Karosserie nach Anspruch 4, dadurch **gekennzeichnet,** daß zwischen einzelnen Matten (4) Platten von begrenzter Ausdehnung vorgesehen sind.

3    8    2

Fig.1

1

4

7    6    Fig.2

5